# EUROPEAN PATENT APPLICATION

(11) **EP 4 613 695 A1**
(43) Date of publication of application: **10.09.2025**
(21) Application number: 25159833.0
(22) Date of filing: 25.02.2025
(51) Int. Cl.: B66F 9/075, B60K 1/04

(54) **LIFT TRUCK**

(30) Priority: 06.03.2024 IT 202400004900
(71) Applicant: Toyota Material Handling Manufacturing Italy S.p.A, 40132 Bologna (IT)
(72) Inventor: BOLDRINI, Luca, 40100 Sala Bolognese (IT); FREMONDI, Simone, 40138 Bologna (IT)
(74) Representative: Casadei, Barbara

(57) **Abstract**

Lift truck comprising a frame (2) which comprises a front portion (3) supporting at least one pair of wheels (4) and a rear portion (5) configured to house a ballast (6);
the frame (2) has a compartment (7) for housing a battery (8) for powering one or more user devices (15), interposed between the front portion (3) and the rear portion (5);
the battery (8) comprises an electricity supply (9) by which the energy produced by it is transferred as output;
a container (10) housing inside it a plurality of electrical power components (11) forming part of an electrical power circuit (12);
the container (10) is designed to protect the electrical power components (11) housed therein from external agents.

## Description

This invention relates to a lift truck.

The lift trucks currently on the market have the power connections distributed in different zones of the truck, without a precise logic other than positioning close to the user devices or further electrical components with which they are coupled.

This circumstance affects the assembly sequences and the times dedicated to any maintenance which can potentially be the subject of improvements in terms of time and efficiency with respect to man hours. With this in mind, the need has been felt of grouping together electrical power components in one or more zones of the truck to speed up both assembly and maintenance of the truck, as described in independent claim 1.

Further features of the invention are described in the accompanying dependent claims.

The advantages of the invention are more apparent in the non-limiting description which follows of a non-exclusive embodiment of a lift truck as illustrated by way of example only and, therefore, without limiting the scope of the invention, in which:

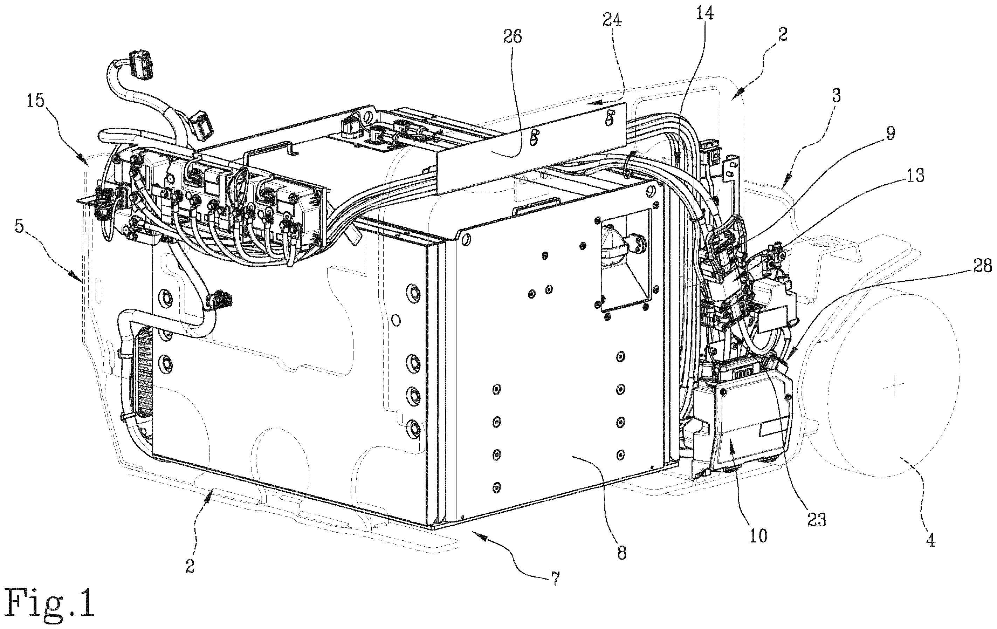

- Figure 1 is a schematic perspective view of a lift truck with some parts cut away in order to better illustrate others;

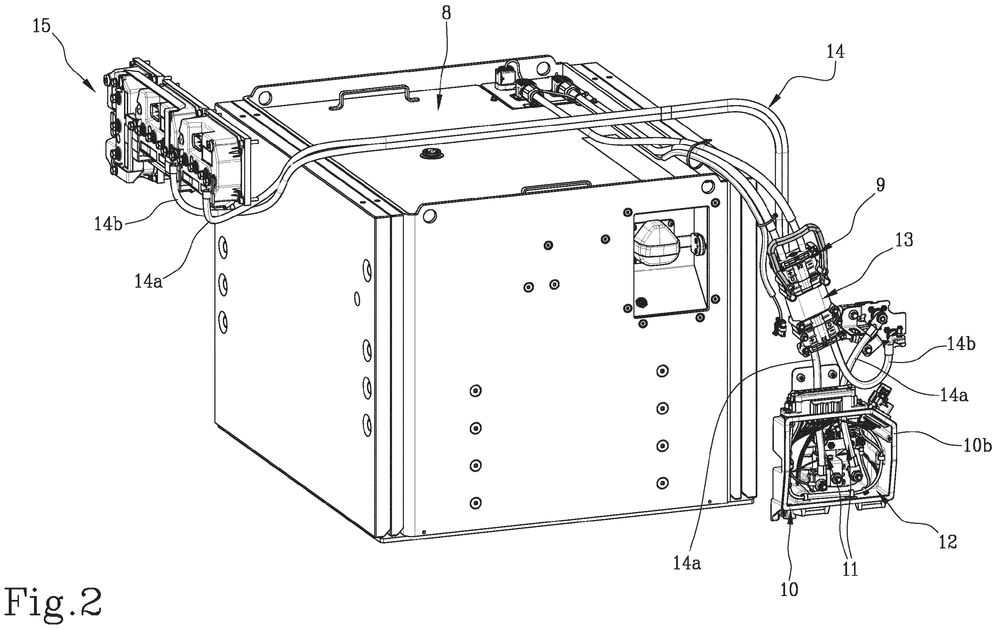

- Figure 2 is a further simplified perspective view showing only some components of the lift truck;

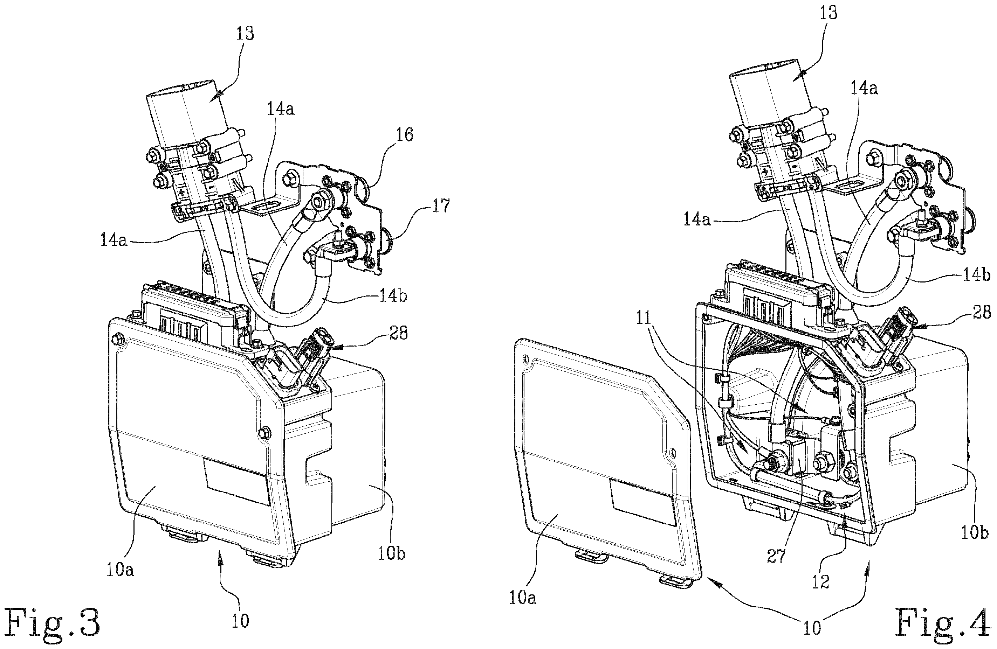

- Figures 3 and 4 illustrate in detail a particular component of Figure 2;

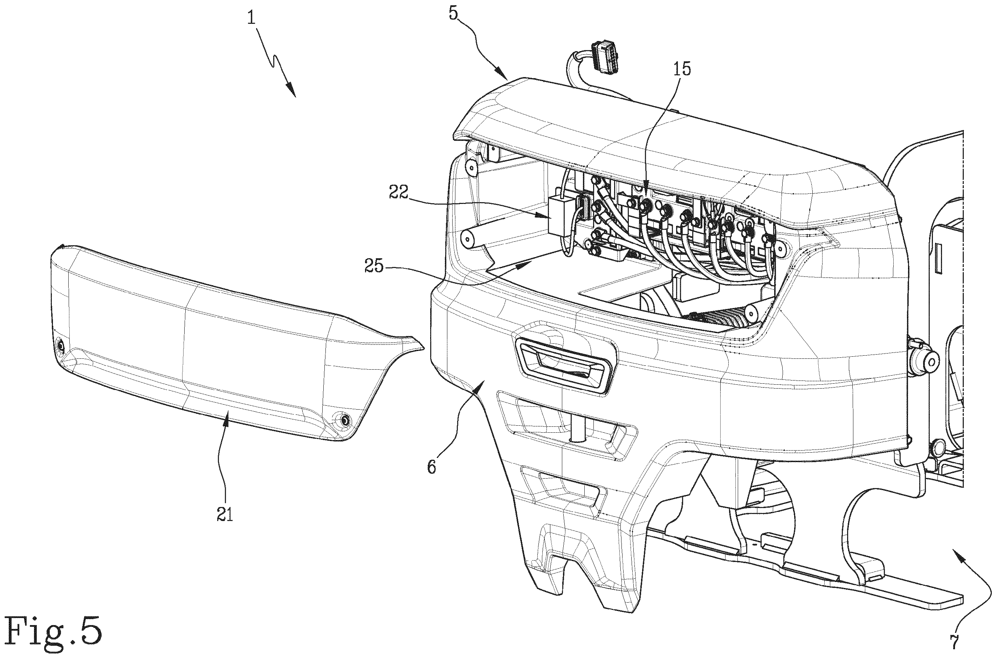

- Figure 5 is a further view of a part of the lift truck of Figure 1 ;

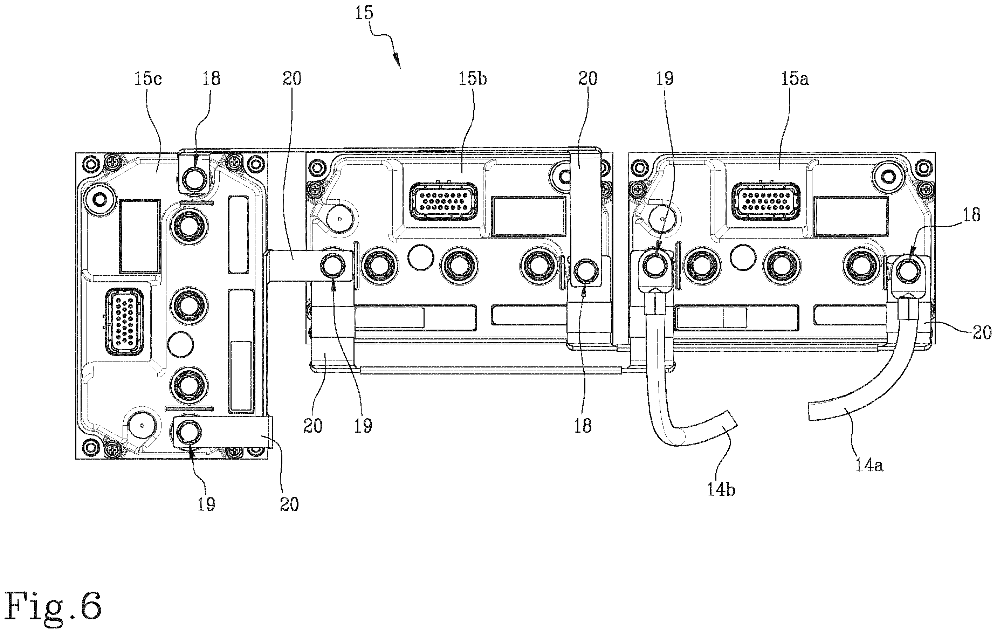

- Figure 6 is a scaled-up view of the components of Figures 2 and 5.

The reference 1 denotes a lift truck according to this invention.

The lift truck 1 comprises a frame 2 having a front portion 3 supporting at least one pair of wheels 4 and a rear portion 5 configured to house a ballast 6.

The frame 2 has a compartment 7 for housing a battery 8 for powering one or more user devices 15.

The compartment 7 is interposed between the front portion 3 and the rear portion 5 of the frame 2.

The compartment 7 for housing the battery 8 is defined by a crosspiece 24 which connects the front portion 3 to the rear portion 5 of the frame 2.

The battery 8 comprises an electricity supply 9 by which the energy produced by it is transferred as output.

By way of example, the battery 8 is 48 V (48 Volts).

The lift truck 1 comprises a single container 10 housing inside it a plurality of electrical power components 11 forming part of an electrical power circuit 12.

By way of example, the electrical power components 11 comprise remote control devices, fuses for protecting connected components and wiring made of copper bars for the electrical connection.

The remote control devices are for controlling inverters, power supply of optional devices, power supply of electric steering if present.

The electrical power circuit 12 comprises a connector 28 for transmitting signals of the electrical power components.

The connector 28 is located outside the container 10.

The container 10 is designed to protect the electrical power components 11 housed therein from extraneous agents, such as, for example, debris, liquids and dust, thereby preserving the components as much as possible. The electric power circuit 12 comprises at least a single fuse 27 configured to protect the user devices from electrical overloads.

The preferred fuse 27 has an amperage of 400 A (400 Amperes).

An electrical terminal 13 for supplying the electrical power circuit 11 is positioned outside the container 10 and is electrically coupled to the electricity supply 9 of the battery 8.

This allows quick and effective electrical connection to be made between the battery 8 and the user devices 15 of the lift truck 1.

A pair of power cables 14, in which direct current flows, extends from the electrical terminal 13.

The power cables 14 are divided into a first cable 14a for the positive potential and a second cable 14b for the negative potential.

The first cable 14a powers the electrical power circuit 12 whose electrical power components 11 are housed in the container.

At the output of the electrical power circuit 12, a further first cable 14a is connected to a respective connector 16.

The second cable 14b at the output of the electrical terminal 13 is connected to a respective connector 17.

Further power cables 14 for powering the user devices 15 extend from the connectors 16, 17.

According to this embodiment the user devices 15 are in the form of a plurality of control modules.

More specifically, the user devices 15 comprise three control modules, a first control module 15a and a second control module 15b dedicated to the traction or movement of the lift truck 1 and a third control module 15c for a unit for lifting a load.

Each control module 15a, 15b, 15c comprises a respective positive pole 18 and a negative pole 19.

The positive poles 18 and the negative poles 19 of the control modules 15a, 15b, 15c are electrically connected to each other by respective plate-shaped elements 20 made of conductive material, preferably copper.

It should be noted that at least a positive pole 18 of a respective control module 15a, 15b, 15c and a negative pole 19 of a control module 15a, 15b, 15c is connected to a respective first power cable 14a and second power cable 14b.

The first power cable 14a and the second power cable 14b extend from respective connectors 16, 17.

Advantageously, the electrical connection of the poles 18, 19 by means of plate-shaped elements 20 made of conductive material makes it possible to limit the overall dimensions of the electrical connections which, alternatively, would be in the form of wiring.

This advantageous solution is possible because, as described in more detail below, the control modules 15 are located in the same zone of the lift truck and positioned adjacent to each other.

It should also be noted that the first power cable 14a and the second power cable 14b which extend from respective connectors 16, 17 and reach the control modules 15 are anchored to a crosspiece 24 of the frame 2 by means of a supporting element 26.

The rear portion 5 of the frame 2 has a compartment 25 for housing the control modules 15, accessible from the outside and positioned above the ballast 6.

A cover 21 for covering the compartment 25 for housing the control modules 15 is removably connected to the frame 2 to allow easy and rapid access to the components installed there.

Connecting means, such as, for example, screws, connect the cover 21 to a rear portion 5 of the frame 2.

According to an embodiment, the electrical terminal 22 for recharging the battery 8 is positioned in the compartment 25 for housing the control modules 15.

In order to guarantee a greater protection, a cover of plastic material is interposed between the control modules 15 and the cover 21.

As regards the positioning of the container 10, it is located in a portion of frame 2 accessible from the outside.

According to the preferred embodiment, the front portion 3 of the frame 2 comprises a wall 23, adjacent to the compartment 7 for housing the battery 8, where the container 10 is positioned.

The wall 23 is a part of the crosspiece 24.

Considering the lift truck 1, the container 10 is positioned along a side wall concealed by the bodywork.

Connecting means, such as fixing screws, stably anchor the container 10 to the frame 2.

The container 10 may be made of metal or plastic material.

The container 10 comprises a cover 10a removably connected to a base 10b which houses the electric power components 11.

In other words, the container 10 is in the form of a box.

The base 10b defines the body of the box.

The cover 10 allows the components contained in the base 10b of the container to be inspected and maintained.

Advantageously, the container 10 allows all the electrical power connections 11 to be incorporated in a unit which allows fast installation and connection.

Another advantage is the increased protection against debris and other potential contaminants.

## Claims

1. A lift truck comprising a frame (2) comprising a front portion (3) supporting at least one pair of wheels (4) and a rear portion (5) configured to house a ballast (6);
the frame (2) has a compartment (7) for housing a battery (8) for powering one or more user devices (15), interposed between the front portion (3) and the rear portion (5);
the battery (8) comprises an electricity supply (9) by which the energy produced by it is transferred as output;
**characterised in that** it comprises a container (10) housing inside it a plurality of electrical power components (11) forming part of an electrical power circuit (12);
the container (10) comprises a base (10b), or body (10b) of the container (10), which houses the electric power components (11) and a cover (10a) removably connected to the base (10b);
the container (10) is designed to protect the electrical power components (11) housed therein from external agents;
the container (10) is positioned in a dedicated zone of the frame (2);
an electrical terminal (13) for supplying the electrical power circuit (12), positioned outside the container (10), is coupled to the electricity supply (9) of the battery (8);
a pair of power cables (14), in which direct current flows, extending from the electrical terminal (13)
the power cables (14) are divided into a first cable (14a) for the positive potential and a second cable (14b) for the negative potential;
the first cable (14a) powers the electrical power circuit (12) whose electrical power components (11) are housed in the container (10);
at the output of the electrical power circuit (12), a further first cable (14a) is connected to a respective connector (16);
the second cable (14b) at the output of the electrical terminal (13) is connected to a respective connector (17);
further power cables (14) for powering the user devices (15) extend from the connectors (16, 17).

2. The lift truck according to the preceding claim, **characterised in that** the container (10) is positioned in a portion of frame (2) accessible from the outside, close to the compartment (7) for housing the battery (8).

3. The lift truck according to the preceding claim, **characterised in that** the frame portion (2) defines a wall (23) of a crosspiece (24) connecting the front portion (3) and the rear portion (4) of the frame (2).

4. The lift truck according to any one of the preceding claims, **characterised in that** the rear portion (5) of the frame (2) has a compartment (25) for housing the user devices (15), in the form of control modules (15), accessible from the outside and positioned above the ballast (6).

5. The lift truck according to the preceding claim, **characterised in that** an electrical terminal (22) for recharging the battery (8) is positioned in the compartment (25) for housing the control modules (15).

6. The lift truck according to the preceding claim, **characterised in that** it comprises a cover (21) for covering the compartment (25) for housing the control modules (15) which is removably connected to the frame (2).

7. The lift truck according to any one of the preceding claims, **characterised in that** the user devices (15) are in the form of a plurality of control modules (15); each control module (15) comprises a respective positive pole (18) and a negative pole (19);
the positive poles (18) and the negative poles (19) of the control modules (15) are electrically connected to each other by respective plate-shaped elements (20) made of conductive material, preferably copper; at least a positive pole (18) and a negative pole (19) of a control module (15) is connected to a respective first power cable (14a) and second power cable (14b).

8. The lift truck according to the preceding claim, **characterised in that** it comprises three control modules (15a, 15b, 15c), a first control module (15a) and a second control module (15b) of the traction of the truck (1) and a third control module (15c) of a load lifting unit.

9. The lift truck according to any one of the preceding claims, **characterised in that** the first power cable (14a) and the second power cable (14b) which extend from respective connectors (16, 17) and reach the user devices (15) are anchored to a crosspiece (24) of the frame (2) by means of a supporting element (26).

10. The lift truck according to any one of the preceding claims, **characterised in that** the electrical power circuit (12) comprises at least a single fuse (27) configured to protect from electrical overloads of the user devices (15).
